# EUROPEAN PATENT APPLICATION

(11) **EP 4 708 539 A1**
(43) Date of publication of application: **11.03.2026**
(21) Application number: 24887621.1
(22) Date of filing: 11.09.2024
(51) Int. Cl.: H01M 50/449, H01M 50/434, H01M 10/42, H01M 50/44, H01M 50/403

(54) **SEPARATOR AND PREPARATION METHOD THEREFOR, AND SECONDARY BATTERY**

(30) Priority: 08.11.2023 CN 202311477192
(71) Applicant: Zhejiang Liwinon Electronic Technology Co., Ltd., Jinhua, Zhejiang 321113 (CN)
(72) Inventor: LAI, Shiqing, Jinhua, Zhejiang 321113 (CN); LAI, Xulun, Jinhua, Zhejiang 321113 (CN); XIANG, Haibiao, Jinhua, Zhejiang 321113 (CN)
(74) Representative: Chung, Hoi Kan
(86) International application number: PCT/CN2024/118120
(87) International publication number: WO 2025/098002

(57) **Abstract**

The present disclosure provides a separator, a preparation method thereof, and a secondary battery using the same. The separator comprises a substrate layer and a hybrid coating applied to at least one surface of the substrate layer. In parts by weight, the hybrid coating comprises 25 parts to 45 parts of a component A, 13 parts to 16 parts of a component B, and 6 parts to 8 parts of a binder. The component A is cellulose with a characteristic peak for a molecular chain spacing at 2θ of 10° to 35°, and the component B is at least one selected from the group consisting of an oxide, a ceramic fiber, and a metal-organic framework. Compared to the prior art, the separator provided by the present disclosure adopts the hybrid coating in which cellulose with a characteristic peak for a molecular chain spacing at 2θ of 10° to 35° is adopted as the component A and contents of the component A, the component B, and the binder are controlled within the above ranges. As a result, the present disclosure effectively enhances the heat resistance of the separator and guarantees the high safety of batteries even when used under extreme conditions.

## Description

### TECHNICAL FIELD

The present disclosure relates to the field of secondary batteries, and specifically relates to a separator, a preparation method thereof, and a secondary battery using the same.

### BACKGROUND

Lithium-ion batteries are widely used in various new energy devices due to advantages such as high energy density, no memory effect, long cycling life, and environmental friendliness. A lithium-ion battery generally comprises a positive electrode, a negative electrode, a separator, an electrolyte, and a casing. Currently, the common separators are polyolefin separators or ceramic-coated polyolefin separators. However, both of these two types of separators have relatively low melting points, such as 130°C for the polyethylene (PE) and 165°C for the polypropylene (PP). Thus, these two types of separators undergo significant shrinkage at high temperatures, which compromises the safety of batteries under extreme conditions and thus greatly limits the use of these batteries under extreme conditions.

In view of this, it is necessary to provide a technical solution to address the aforementioned issues.

### SUMMARY

A first objective of the present disclosure is to provide a separator in view of the shortcomings in the prior art, so as to solve the problem that, because the existing separators have low melting points and are prone to significant shrinkage at high temperatures, the corresponding batteries cannot be safely used under extreme conditions.

To achieve the first objective, the present disclosure adopts the following technical solutions:
A separator is provided, comprising:
a substrate layer; and
a hybrid coating applied to at least one surface of the substrate layer, wherein in parts by weight, the hybrid coating comprises 25 parts to 45 parts of a component A, 13 parts to 16 parts of a component B, and 6 parts to 8 parts of a binder; and
the component A is cellulose with a characteristic peak for a molecular chain spacing at 2θ of 10° to 35°, and the component B is at least one selected from the group consisting of an oxide, a ceramic fiber, and a metal-organic framework.

Preferably, the substrate layer has a thickness of 3 µm to 20 µm, a porosity of 20% to 50%, and an air permeability of 30 sec/100 cc to 400 sec/100 cc; and a single-side coating weight of the hybrid coating is higher than or equal to 0.7 g/m² and a single-side coating thickness of the hybrid coating is 0.5 µm to 1.0 µm.

Preferably, the component A has a diameter of 4 nm to 60 nm and a length of 100 nm to 5,000 nm.

Preferably, a ratio of a particle size D50 of the component B to the diameter of the component A is 5 to 125; and a ratio of a particle size D90 of the component B to the length of the component A is 0.5 to 15.

Preferably, the particle size D50 of the component B is 150 nm to 700 nm, and the particle size D90 of the component B is 300 nm to 1,500 nm.

Preferably, a ratio of a particle size D50 of the binder to the diameter of the component A is 25 to 950; and a ratio of a particle size D90 of the binder to the length of the component A is 2 to 95.

Preferably, the particle size D50 of the binder is 0.5 µm to 4 µm, and the particle size D90 of the binder is 1 µm to 10 µm.

Preferably, the component A is at least one selected from the group consisting of bacterial cellulose, a carboxylated cellulose nanofiber, a cellulose nanocrystal, a sulfonated cellulose nanocrystal, microfibrillated cellulose, and aminated cellulose; the oxide is at least one selected from the group consisting of silicon dioxide, aluminum oxide, silicon monoxide, calcium oxide, magnesium oxide, zinc oxide, titanium dioxide, and boehmite; and the binder is at least one selected from the group consisting of a polyvinylidene fluoride-based resin, polyamide, polyimide, polyacrylonitrile, polyethylene oxide, polyurethane, polyphenylene ether, acrylate copolymer, and polymethyl methacrylate (PMMA).

A second objective of the present disclosure is to provide a preparation method of the separator described above, comprising the following steps:
mixing the component A, the component B, the binder, and a solvent to produce a coating slurry for the hybrid coating; and
applying the coating slurry for the hybrid coating to at least one surface of the substrate layer, and oven-drying to produce the separator.

A third objective of the present disclosure is to provide a secondary battery, comprising a positive electrode, a negative electrode, and a separator arranged between the positive electrode and the negative electrode, wherein the separator is the separator described above.

Compared with the prior art, the present disclosure has the following beneficial effects: In the separator provided by the present disclosure, cellulose with a characteristic peak for a molecular chain spacing at 2θ of 10° to 35° is adopted as the component A in the hybrid coating. This cellulose has favorable crystallinity and can effectively guarantee the mechanical strength and thermal stability of the component A, thereby enhancing the heat resistance of the separator. Moreover, contents of the component B and the binder are controlled within the ranges defined in the present disclosure, which further reduces the thermal shrinkage of the separator while ensuring the adhesion between the separator and electrodes. As a result, the hybrid coating prepared from the component A, the component B, and the binder in controlled parts by weight significantly improves the heat resistance of the separator. Batteries using the separator demonstrate high safety even when used at high temperatures. Therefore, the present disclosure broadens the application range of lithium-ion batteries.

### BRIEF DESCRIPTION OF THE DRAWINGS

FIG. 1 is a first schematic structural diagram of the separator of the present disclosure;
FIG. 2 is a second schematic structural diagram of the separator of the present disclosure;
FIG. 3 shows a test result of 1 min diffusion of an electrolyte in a separator of Example 1 of the present disclosure;
FIG. 4 shows a test result of 1 min diffusion of an electrolyte in a separator of Example 2 of the present disclosure;
FIG. 5 shows a test result of 1 min diffusion of an electrolyte in a separator of Example 3 of the present disclosure;
FIG. 6 shows a test result of 1 min diffusion of an electrolyte in a separator of Example 4 of the present disclosure; and
FIG. 7 is a comparative diagram illustrating peel strengths between the separators in Examples 2, 6, and 7 of the present disclosure and an electrode that are bonded together.

In the figures, 1 represents a substrate layer and 2 represents a hybrid coating.

### DETAILED DESCRIPTION OF THE EMBODIMENTS

In order to make the technical solutions and advantages of the present disclosure clear, the present disclosure and beneficial effects thereof will be further described in detail below with reference to specific embodiments and the accompanying drawings, but the embodiments of the present disclosure are not limited thereto.

### 1. Separator

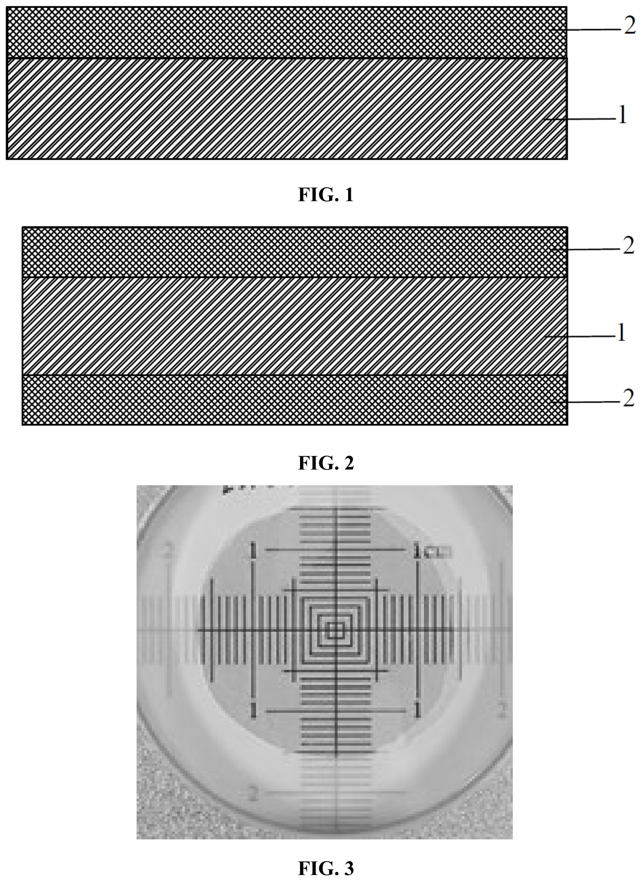

A first aspect of the present disclosure provides a separator. As shown in FIG. 1 to FIG. 2, the separator comprises a substrate layer 1 and a hybrid coating 2 applied to at least one surface of the substrate layer 1. In parts by weight, the hybrid coating 2 comprises 25 parts to 45 parts of a component A, 13 parts to 16 parts of a component B, and 6 parts to 8 parts of a binder. The component A is cellulose with a characteristic peak for a molecular chain spacing at 2θ of 10° to 35°. The component B is at least one selected from the group consisting of an oxide, a ceramic fiber, and a metal-organic framework.

In the separator of the present disclosure, cellulose with a characteristic peak for a molecular chain spacing at 20 of 10° to 35° is adopted as the component A. This component A exhibits higher crystallinity than conventional cellulose. The increase in crystallinity of the cellulose enhances the mechanical strength and thermal stability. As one of the main components of the hybrid coating 2, the component A ensures the mechanical properties and heat resistance of the hybrid coating, thereby enabling improved thermal shrinkage resistance.

The content of the component B in the hybrid coating 2 of the present disclosure is significantly reduced in contrast to conventional ceramic coatings for separators. Moreover, the specially structured component A plays a dominant role, and can cooperate with the component B and the binder to effectively reduce the thermal shrinkage of the separator. Thus, the corresponding batteries demonstrate high safety and can adapt to applications under extreme conditions.

Specifically, in parts by weight, there can be 25 parts to 30 parts, 30 parts to 35 parts, 35 parts to 40 parts, or 40 parts to 45 parts of the component A. When the content of the component A is controlled in the above ranges, the separator can be prevented from insufficient electrolyte wettability caused by a too-low content of the component A, and can also be prevented from excessive air permeability caused by a too-high content of the component A, which may affect the long-term cycling performance of a battery.

On the basis of the component A, in parts by weight, there can be 13 parts to 14 parts, 14 parts to 15 parts, or 15 parts to 16 parts of the component B.

On the basis of the component A, in parts by weight, there can be 6 parts to 7 parts or 7 parts to 8 parts of the binder. The inventors of the present disclosure have found that, in the hybrid coating 2, a binder content of less than 6 parts by weight is easy to cause poor adhesion between the separator and an electrode, and a binder content of more than 8 parts by weight is detrimental to enhancing the heat resistance of the separator due to the reduced content of the component A. Compared to the binder contents in conventional separators, the binder content in the present disclosure is relatively low, making the contents of the component A and the component B relatively high. Consequently, while guaranteeing excellent adhesion with an electrode, the separator of the present disclosure exhibits enhanced heat resistance.

In some embodiments, the substrate layer 1 has a thickness of 3 µm to 20 µm, which can specifically be 3 µm to 6 µm, 6 µm to 8 µm, 8 µm to 10 µm, 10 µm to 12 µm, 12 µm to 14 µm, 14 µm to 16 µm, 16 µm to 18 µm, or 18 µm to 20 µm. When the thickness of the substrate layer 1 is set in the aforementioned ranges, the thickness is sufficient to support the hybrid coating 2, and does not increase the overall thickness of a battery to reduce the volumetric energy density of the battery.

In some embodiments, the substrate layer 1 has a porosity of 20% to 50% and an air permeability of 30 sec/100 cc to 400 sec/100 cc. When the substrate layer 1 has a porosity and air permeability within the above ranges, the flexible passage of lithium ions can be ensured. Specifically, the porosity of the substrate layer 1 may be 20% to 25%, 25% to 30%, 30% to 35%, 35% to 40%, 40% to 45%, or 45% to 50%.

In some embodiments, the substrate layer 1 has a melting point of 130°C to 160°C.

Specifically, a material for the substrate layer 1 may be one or a combination of two or more selected from the group consisting of polyethylene, polypropylene, polyvinylidene fluoride, aramid, polyethylene terephthalate, polytetrafluoroethylene, polyacrylonitrile, polyimide, polyamide, and polyester.

In some embodiments, the hybrid coating 2 is applied to one or two surfaces of the substrate layer 1.

A single-side coating weight of the hybrid coating 2 is more than or equal to 0.7 g/m². This single-side coating weight can prevent excessive thermal shrinkage of the separator due to the failure of the hybrid coating 2 at an insufficient amount and thus can avoid safety problems such as internal short circuits in battery cells. A single-side coating thickness of the hybrid coating is 0.5 µm to 1.0 µm. Further, if the hybrid coating is applied to two surfaces of the substrate layer, a weight difference and a thickness difference between hybrid coatings applied to the two surfaces should be less than or equal to 20%, and a total thickness of the hybrid coatings applied to the two surfaces should be less than or equal to 2 µm. This can improve the energy density of a battery while ensuring thickness benefits.

Preferably, the single-side coating weight of the hybrid coating 2 is 0.7 g/m² to 0.9 g/m², and the single-side coating thickness of the hybrid coating 2 is 0.5 µm to 0.8 µm.

In some embodiments, the component A has a diameter of 4 nm to 60 nm and a length of 100 nm to 5,000 nm. Specifically, the diameter of the component A may be 4 nm to 10 nm, 10 nm to 15 nm, 15 nm to 20 nm, 20 nm to 25 nm, 25 nm to 30 nm, 30 nm to 35 nm, 35 nm to 40 nm, 40 nm to 45 nm, 45 nm to 50 nm, or 50 nm to 60 nm. The length of the component A may be 100 nm to 1,000 nm, 1,000 nm to 2,000 nm, 2,000 nm to 3,000 nm, 3,000 nm to 4,000 nm, or 4,000 nm to 5,000 nm.

On the premise that the characteristic peak for the molecular chain spacing of the cellulose is at 20 of 10° to 35°, the further selection of the diameter and length within the aforementioned ranges can ensure a stable structure of the cellulose and lead to superior mechanical strength and thermal stability.

In some embodiments, the component A is at least one selected from the group consisting of bacterial cellulose, a carboxylated cellulose nanofiber, a cellulose nanocrystal, a sulfonated cellulose nanocrystal, microfibrillated cellulose, and aminated cellulose.

In some embodiments, a ratio of a particle size D50 of the component B to the diameter of the component A is 5 to 125, and a ratio of a particle size D90 of the component B to the length of the component A is 0.5 to 15.

Specifically, the ratio of the particle size D50 of the component B to the diameter of the component A can be 5 to 10, 10 to 20, 20 to 30, 30 to 40, 40 to 50, 50 to 60, 60 to 70, 70 to 80, 80 to 90, 90 to 100, or 100 to 125, and the ratio of the particle size D90 of the component B to the length of the component A can be 0.5 to 1, 1 to 3, 3 to 5, 5 to 8, 8 to 10, or 10 to 15. On the premise that the component A satisfies the aforementioned ranges, the inventors have found that the use of the component B with an appropriate particle size in combination with the component A can effectively enhance the heat resistance of the separator and can further improve the safety of a battery.

Preferably, the ratio of the particle size D50 of the component B to the diameter of the component A can be 5 to 75, and the ratio of the particle size D90 of the component B to the length of the component A can be 0.5 to 7. More preferably, the ratio of the particle size D50 of the component B to the diameter of the component A can be 8 to 50, and the ratio of the particle size D90 of the component B to the length of the component A can be 0.5 to 3.5.

In some embodiments, given that the component A has a diameter of 4 nm to 60 nm and a length of 100 nm to 5,000 nm, the particle size D50 of the component B can be 150 nm to 700 nm and the particle size D90 of the component B can be 300 nm to 1,500 nm.

Specifically, the particle size D50 of the component B can be 150 nm to 200 nm, 200 nm to 300 nm, 300 nm to 400 nm, 400 nm to 500 nm, 500 nm to 600 nm, or 600 nm to 700 nm, and the particle size D90 of the component B can be 300 nm to 500 nm, 500 nm to 700 nm, 700 nm to 1,000 nm, 1,000 nm to 1,200 nm, or 1,200 nm to 1,500 nm.

The component B adopted in the present disclosure has a smaller particle size and a more uniform particle size distribution than components B used in the existing ceramic coatings. The component B with the aforementioned particle size composition exhibits improved compatibility with the component A. Thus, the combined use of the component A and the component B can effectively enhance the heat resistance of the separator.

In some embodiments, the component B is at least one selected from the group consisting of an oxide, a ceramic fiber, and a metal-organic framework. The oxide is at least one selected from the group consisting of silicon dioxide, aluminum oxide, silicon monoxide, calcium oxide, magnesium oxide, zinc oxide, titanium dioxide, and boehmite.

In some embodiments, a ratio of a particle size D50 of the binder to the diameter of the component A is 25 to 950, and a ratio of a particle size D90 of the binder to the length of the component A is 2 to 95.

Specifically, the ratio of the particle size D50 of the binder to the diameter of the component A can be 25 to 100, 100 to 200, 200 to 300, 300 to 400, 400 to 500, 500 to 600, 600 to 700, 700 to 800, or 800 to 950, and the ratio of the particle size D90 of the binder to the length of the component A can be 2 to 10, 10 to 20, 20 to 30, 30 to 40, 40 to 50, 50 to 60, 60 to 70, 70 to 80, or 80 to 95.

The binder provides adhesion between the separator and an electrode. In addition, when the component A satisfying the aforementioned ranges is selected, the binder in the specified particle size ranges can work synergistically with the component A to enhance the electrolyte absorption and retention performance, thereby improving the cycling performance of a battery.

Preferably, the ratio of the particle size D50 of the binder to the diameter of the component A can be 25 to 400, and the ratio of the particle size D90 of the binder to the length of the component A can be 2 to 50. More preferably, the ratio of the particle size D50 of the binder to the diameter of the component A can be 30 to 150, and the ratio of the particle size D90 of the binder to the length of the component A can be 2 to 20.

In some embodiments, the particle size D50 of the binder is 0.5 µm to 4 µm, and the particle size D90 of the binder is 1 µm to 10 µm.

Specifically, the particle size D50 of the binder can be 0.5 µm to 1 µm, 1 µm to 1.5 µm, 1.5 µm to 2 µm, 2 µm to 2.5 µm, 2.5 µm to 3 µm, 3 µm to 3.5 µm, or 3.5 µm to 4 µm, and the particle size D90 of the binder may be 1 µm to 2 µm, 2 µm to 3 µm, 3 µm to 4 µm, 4 µm to 5 µm, 5 µm to 6 µm, 6 µm to 7 µm, 7 µm to 8 µm, or 8 µm to 10 µm.

In some embodiments, the binder is at least one selected from the group consisting of a polyvinylidene fluoride-based resin, polyamide, polyimide, polyacrylonitrile, polyethylene oxide, polyurethane, polyphenylene ether, acrylate copolymer, and polymethyl methacrylate.

A second aspect of the present disclosure provides a preparation method of the separator, comprising the following steps:

The component A, the component B, the binder, and a solvent are mixed to produce a coating slurry for the hybrid coating 2.

The coating slurry for the hybrid coating 2 is applied to at least one surface of the substrate layer 1, and oven-dried to produce the separator.

In some embodiments, a method for applying the coating slurry can be one or more selected from the group consisting of micro-gravure coating, extrusion coating, dip coating, spray coating, dot coating, and wire bar coating.

In some embodiments, the solvent may be at least one selected from the group consisting of water, dimethylacetamide (DMAC), dichloroethane, dimethylformamide (DMF), trichloroethane, trichloromethane, ethyl acetate (EA), sulfolane, dimethyl sulfoxide (DMSO), N-methylpyrrolidone (NMP), chloroform, dichloromethane, and acetone.

### 2. Secondary battery

A fourth aspect of the present disclosure provides a secondary battery, comprising a positive electrode, a negative electrode, and a separator arranged between the positive electrode and the negative electrode, wherein the separator is the separator described above.

The positive electrode comprises a positive-electrode current collector and a positive-electrode active material layer coated on at least one surface of the positive-electrode current collector. The positive-electrode active material layer comprises a positive-electrode active material. The positive-electrode active material is commonly used in the current lithium-ion batteries, and comprises, but is not limited to, one or a combination of two or more selected from the group consisting of compounds shown in a chemical formula LiₓNiₕCo_{y}M_{z}O_{2-d}N_{d} (wherein 0.95 ≤ x ≤ 1.2, h > 0, y ≥ 0, z ≥ 0, and h + y + z = 1; 0 ≤ d ≤ 1; M is one or a combination of two selected from the group consisting of Mn and Al; and N is one or a combination of two or more selected from the group consisting of F, P, and S). The positive-electrode active material may also comprise, but is not limited to, one or a combination of two or more selected from the group consisting of LiCoO₂, LiNiO₂, LiVO₂, LiCrO₂, LiMn₂O₄, LiCoMnO₄, Li₂NiMn₃O₈, LiNi_{0.5}Mn_{1.5}O₄, LiCoPO₄, LiMnPO₄, LiFePO₄, LiNiPO₄, LiCoFSO₄, CuS₂, FeS₂, MoS₂, NiS, and TiS₂. The positive-electrode active material may also be modified. A method for modifying the positive-electrode active material should be known to those skilled in the art. For example, the positive-electrode active material can be modified through coating, doping, etc. A material for modifying the positive-electrode active material comprises, but is not limited to, one or a combination of two or more selected from the group consisting of Al, B, P, Zr, Si, Ti, Ge, Sn, Mg, Ce, and W. The positive-electrode current collector can be a metal foil or a foil comprising a metal layer, and can specifically be an aluminum foil or a foil comprising an aluminum layer.

The negative electrode comprises a negative-electrode current collector and a negative-electrode active material layer coated on at least one surface of the negative-electrode current collector. The negative-electrode active material layer comprises a negative-electrode active material. The negative-electrode active material is commonly used in the current lithium-ion batteries, and comprises, but is not limited to, one or more selected from the group consisting of graphite, soft carbon, hard carbon, a carbon fiber, a mesocarbon microbead, a silicon-based material, a tin-based material, lithium titanate, and other metals capable of producing alloys with lithium. The graphite can be one or more selected from the group consisting of synthetic graphite, natural graphite, and modified graphite. The silicon-based material can be one or more selected from the group consisting of elemental silicon, a silicon oxide, a silicon-carbon composite, and a silicon alloy. The tin-based material can be one or more selected from the group consisting of elemental tin, a tin oxide, and a tin alloy. The negative-electrode current collector can be a metal foil or a foil comprising a metal layer, and can specifically be a copper foil or a foil comprising a copper layer.

The secondary battery further comprises an electrolyte. The electrolyte comprises an organic solvent, a lithium salt for electrolytes, and an additive. The lithium salt for electrolytes may be LiPF₆ and/or LiBOB used in high-temperature electrolytes; at least one selected from the group consisting of LiBF₄, LiBOB, and LiPF₆ used in low-temperature electrolytes; at least one selected from the group consisting of LiBF₄, LiBOB, LiPF₆, and LiTFSI used in overcharge protection electrolytes; or at least one selected from the group consisting of LiClO₄, LiAsF₆, LiCF₃SO₃, and LiN(CF₃SO₂)₂. The organic solvent may be a cyclic carbonate, comprising propylene carbonate (PC) and ethylene carbonate (EC); a chain carbonate, comprising difluoroethylene carbonate (DFEC), dimethyl carbonate (DMC), or ethyl methyl carbonate (EMC); or a carboxylate, comprising methyl formate (MF), methyl acetate (MA), ethyl acetate (EA), methyl propionate (MP), etc. The additive comprises, but is not limited to, at least one selected from the group consisting of a film-forming additive, a conductive additive, a flame-retardant additive, an overcharge protection additive, an additive for controlling H₂O and HF contents in an electrolyte, an additive for improving low-temperature performance, and a multi-functional additive.

To make the technical solutions and advantages of the present disclosure clear, the present disclosure will be described in detail below with reference to examples, but the embodiments of the present disclosure are not limited thereto.

### Example 1

A separator is provided, comprising a substrate layer and a hybrid coating applied to a surface of the substrate layer. In parts by weight, the hybrid coating comprises 25 parts of a component A, 15.2 parts of a component B, and 6 parts of a binder. The component A is a sulfonated cellulose nanocrystal with characteristic peaks for a molecular chain spacing at 16° and 22°. The component B is aluminum oxide. The binder is PMMA. The substrate layer is PE with a thickness of 8 µm, a porosity of 40%, and an air permeability of 300 sec/100 cc.

The component A has a diameter of 15 nm and a length of 500 nm. The component B has D50 of 0.189 µm and D90 of 0.323 µm. The binder has D50 of 0.591 µm and D90 of 1.037 µm.

A preparation method of the separator is as follows:
1) 40 parts of a solvent (NMP), 25 parts of the component A (sulfonated cellulose nanocrystal), 15.2 parts of the component B (aluminum oxide), and 6.7 parts of the binder (PMMA) were taken, mixed, and stirred for complete dispersion (rotational speed for the stirring: 1,000 rpm/min, and dispersion time: 100 min) to produce a coating slurry with a solid content of 15% for the hybrid coating.
2) The coating slurry for the hybrid coating was applied to two surfaces of the substrate layer using a gravure roller with a coating density of 0.8 g/m² and a single-side coating thickness of 0.7 µm, and then oven-dried to produce the separator.

### Example 2

This example is different from Example 1 in the composition of the hybrid coating. In this example, the hybrid coating comprises 35 parts of the component A, 14.4 parts of the component B, and 6 parts of the binder.

The rest is the same as in Example 1 and will not be repeated here.

### Example 3

This example is different from Example 1 in the composition of the hybrid coating. In this example, the hybrid coating comprises 25 parts of the component A, 14.8 parts of the component B, and 8 parts of the binder.

The rest is the same as in Example 1 and will not be repeated here.

### Example 4

This example is different from Example 1 in the composition of the hybrid coating. In this example, the hybrid coating comprises 45 parts of the component A, 13.6 parts of the component B, and 8 parts of the binder.

The rest is the same as in Example 1 and will not be repeated here.

### Example 5

This example is different from Example 1 in the composition of the hybrid coating. In this example, the hybrid coating comprises 25 parts of the component A, 14.4 parts of the component B, and 7 parts of the binder.

The rest is the same as in Example 1 and will not be repeated here.

### Example 6

This example is different from Example 1 in the composition of the hybrid coating. In this example, the hybrid coating comprises 35 parts of the component A, 14.4 parts of the component B, and 8 parts of the binder.

The rest is the same as in Example 1 and will not be repeated here.

### Example 7

This example is different from Example 1 in the composition of the hybrid coating. In this example, the hybrid coating comprises 35 parts of the component A, 14.4 parts of the component B, and 6 parts of the binder.

The rest is the same as in Example 1 and will not be repeated here.

### Example 8

This example is different from Example 1 in the composition of the hybrid coating. In this example, the hybrid coating comprises 45 parts of the component A, 14.4 parts of the component B, and 6 parts of the binder.

The rest is the same as in Example 1 and will not be repeated here.

### Example 9

This example is different from Example 1 in the selection of the component A. In this example, the component A has a diameter of 30 nm and a length of 1,000 nm.

The rest is the same as in Example 1 and will not be repeated here.

### Example 10

This example is different from Example 1 in the selection of the component A. In this example, the component A has a diameter of 30 nm and a length of 1,000 nm.

The rest is the same as in Example 1 and will not be repeated here.

### Example 11

This example is different from Example 1 in the selection of the component A. In this example, the component A is a carboxylated cellulose nanofiber.

The rest is the same as in Example 1 and will not be repeated here.

### Comparative Example 1

This comparative example is different from Example 1 in the composition of the hybrid coating. In this comparative example, the hybrid coating comprises 45 parts of the component A, 25.5 parts of the component B, and 10 parts of the binder.

The rest is the same as in Example 1 and will not be repeated here.

### Comparative Example 2

This comparative example is different from Example 1 in the composition of the hybrid coating. In this comparative example, the hybrid coating comprises 25 parts of the component A, 25.5 parts of the component B, and 10 parts of the binder.

The rest is the same as in Example 1 and will not be repeated here.

### Comparative Example 3

This comparative example is different from Example 1 in the composition of the hybrid coating. In this comparative example, the hybrid coating comprises 60 parts of the component A, 10 parts of the component B, and 10 parts of the binder.

The rest is the same as in Example 1 and will not be repeated here.

### Comparative Example 4

This comparative example is different from Example 1 in the composition of the hybrid coating. In this comparative example, the hybrid coating does not comprise the component A and is composed of the component B and the binder. That is, the hybrid coating is a conventional ceramic coating.

The rest is the same as in Example 1 and will not be repeated here.

Examples 1 to 13 and Comparative Examples 1 to 4 are summarized in Table 1 below.

**Table 1**

| | Component A | | | Component B | | | Binder | | |
|---|---|---|---|---|---|---|---|---|---|
| | Parts by weight | Diameter (nm) | Length (nm) | Parts by weight | D50 (µm) | D90 (µm) | Parts by weight | D50 (µm) | D90 (µm) |
| Example 1 | 25 | 15 | 500 | 15.2 | 0.189 | 0.323 | 6 | 0.591 | 1.037 |
| Example 2 | 35 | 15 | 500 | 14.4 | 0.189 | 0.323 | 7 | 0.591 | 1.037 |
| Example 3 | 25 | 15 | 500 | 14.8 | 0.189 | 0.323 | 8 | 0.591 | 1.037 |
| Example 4 | 45 | 15 | 500 | 13.6 | 0.189 | 0.323 | 8 | 0.591 | 1.037 |
| Example 5 | 25 | 15 | 500 | 14.4 | 0.189 | 0.323 | 7 | 0.591 | 1.037 |
| Example 6 | 35 | 15 | 500 | 14.4 | 0.189 | 0.323 | 8 | 0.591 | 1.037 |
| Example 7 | 35 | 15 | 500 | 14.4 | 0.189 | 0.323 | 6 | 0.591 | 1.037 |
| Example 8 | 45 | 15 | 500 | 14.4 | 0.189 | 0.323 | 6 | 0.591 | 1.037 |
| Example 9 | 25 | 30 | 1000 | 14.8 | 0.450 | 1.5 | 8 | 3.826 | 9.218 |
| Example 10 | 25 | 30 | 1000 | 14.8 | 0.450 | 1.5 | 8 | 3.826 | 9.218 |
| Example 11 | 35 | 30 | 1000 | 14.4 | 0.450 | 1.5 | 7 | 3.826 | 9.218 |
| Example 12 | 25 | 60 | 5000 | 14.8 | 0.450 | 1.5 | 8 | 3.826 | 9.218 |
| Example 13 | 35 | 4 | 100 | 14.4 | 0.189 | 0.323 | 7 | 0.591 | 1.037 |
| Comparative Example 1 | 45 | 15 | 500 | 25.5 | 0.189 | 0.323 | 10 | 0.591 | 1.037 |
| Comparative Example 2 | 25 | 15 | 500 | 25.5 | 0.189 | 0.323 | 10 | 0.591 | 1.037 |
| Comparative Example 3 | 60 | 15 | 500 | 10 | 0.189 | 0.323 | 10 | 0.591 | 1.037 |
| Comparative Example 4 | / | / | / | 45 | 0.450 | 1.5 | 10 | 0.591 | 1.037 |

The separators obtained in Examples 1 to 13 and Comparative Examples 1 to 4 were subjected to performance tests, comprising an electrolyte wettability test for Examples 1 to 4, a peel strength test for Examples 2, 6, and 7, and a thermal shrinkage test for Examples 1 to 13 and Comparative Examples 1 to 4.

### Performance tests:

### 1) Electrolyte wettability test:

10 µL of an electrolyte was added dropwise to a lithium-ion battery separator, and 1 min later, the electrolyte remained almost unchanged. Therefore, a photograph was taken at 1 min.

### 2) Peel strength test:

Test steps: a. A specialized green tape was attached to a separator to be tested, and rolled three times with a 2 kg press roller. b. A resulting sample was cut to 15 mm using a strip sampler. c. A specialized double-sided tape was attached to a center of a glass fiber reinforced plastic plate. d. A side with the green tape of a cut sample was attached to the double-sided tape on the glass fiber reinforced plastic plate. e. Testing was conducted at a speed of 200 mm/min and an angle of 180°.

### 3) Thermal shrinkage test:

A test sample was cut to dimensions: machine direction (MD) * transverse direction (TD) = 80 mm × 30 mm. TD thermal shrinkage rate = (TD₀ - TD₁)/TD₀ × 100%, wherein TD₀ represents a length before baking and TD₁ represents a length after baking. MD thermal shrinkage rate = (MD₀ - MD₁)/MD₀ × 100%, wherein MD₀ represents a length before baking and MD₁ represents a length after baking.

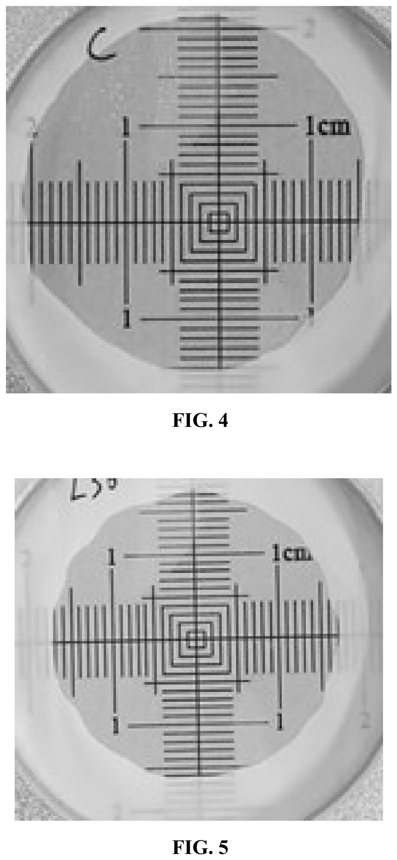

Test results were shown in Tables 2 to 3 below and FIG. 3 to FIG. 7.

**Table 2**

| | Peel strength (N/m) | | | | |
|---|---|---|---|---|---|
| Example 2 | 2.678 | 2.617 | 2.684 | 2.697 | 2.745 |
| Example 6 | 3.283 | 3.225 | 3.617 | 3.815 | 3.445 |
| Example 7 | 1.074 | 1.368 | 1.369 | 1.160 | 1.400 |

**Table 3**

| | 130°C/0.5 h thermal shrinkage (%) | |
|---|---|---|
| | MD | TD |
| Example 1 | 1.91 | 1.53 |
| Example 2 | 2.63 | 2.16 |
| Example 3 | 2.16 | 1.92 |
| Example 4 | 1.94 | 1.92 |
| Example 5 | 2.45 | 2.04 |
| Example 6 | 4.25 | 2.98 |
| Example 7 | 2.52 | 2.01 |
| Example 8 | 2.83 | 2.23 |
| Example 9 | 2.09 | 1.64 |
| Example 10 | 2.38 | 2.07 |
| Example 11 | 2.64 | 2.07 |
| Example 12 | 2.35 | 3.16 |
| Example 13 | 2.74 | 2.21 |
| Comparative Example 1 | 10.55 | 7.04 |
| Comparative Example 2 | 9.71 | 6.93 |
| Comparative Example 3 | 11.44 | 7.52 |
| Comparative Example 4 | 17.88 | 10.16 |

According to the wettability results shown in FIG. 3 to FIG. 6, the electrolyte wettability varies with the composition of the hybrid coating. Example 2 demonstrates the optimal wettability, primarily because the hybrid coating has an optimized composition and a synergistic effect between the component A and the binder well ensures the electrolyte absorption and retention performance of the separator.

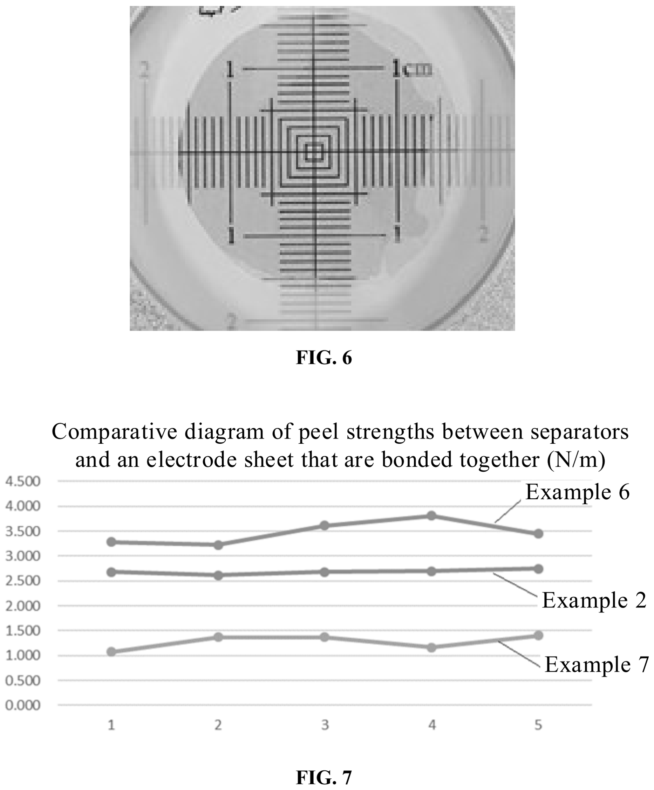

According to the test results in Table 2 and FIG. 7, as the content of the binder increases, the peel strength between the separator and an electrode could be further increased, that is, the adhesion is improved. However, the increase in the content of the binder means the decline in the contents of the component A and the component B. The lower the contents of the component A and the component B, the greater the degree of thermal shrinkage in the separator. Preferably, when the binder is added in 7 parts by weight and the component A is added in 35 parts by weight, the separator exhibits both excellent heat resistance and prominent adhesion.

It can also be seen from the test results of Examples 1, 7, and 8 and Examples 3, 4, and 6 in Table 3 that the increase in the content of the component A is conducive to improving the heat resistance of the separator. However, the excessively high content of the component A should be avoided because it correspondingly reduces the contents of the component B and the binder, which is not beneficial for improving the heat resistance of the separator. Preferably, when the contents of the component A, the component B, and the binder are regulated simultaneously, a separator with balanced heat resistance, adhesion, and wettability can be obtained.

In summary, in the hybrid coating of the separator provided by the present disclosure, the specially structured component A is introduced, and the contents of the component A, the component B, and the binder are controlled within the respective ranges defined in the present disclosure. As a result, the present disclosure effectively enhances the heat resistance of the separator and guarantees the high safety of batteries even when used under extreme conditions.

According to the disclosure and teaching of the above specification, those skilled in the field of the present disclosure may also change and modify the above embodiments. Therefore, the present disclosure is not limited to the above specific embodiments, and any obvious improvements, replacements, or modifications made by those skilled in the art on the basis of the present disclosure should fall within the protection scope of the present disclosure. In addition, although some specific terms are used in the specification, these terms are provided to merely illustrate rather than limit the present disclosure.

## Claims

1. A separator, comprising:
a substrate layer; and
a hybrid coating applied to at least one surface of the substrate layer, wherein in parts by weight, the hybrid coating comprises 25 parts to 45 parts of a component A, 13 parts to 16 parts of a component B, and 6 parts to 8 parts of a binder; and
the component A is cellulose with a characteristic peak for a molecular chain spacing at 2θ of 10° to 35°, and the component B is at least one selected from the group consisting of an oxide, a ceramic fiber, and a metal-organic framework.

2. The separator according to claim 1, wherein the substrate layer has a thickness of 3 µm to 20 µm, a porosity of 20% to 50%, and an air permeability of 30 sec/100 cc to 400 sec/100 cc; and a single-side coating weight of the hybrid coating is higher than or equal to 0.7 g/m² and a single-side coating thickness of the hybrid coating is 0.5 µm to 1.0 µm.

3. The separator according to claim 1, wherein the component A has a diameter of 4 nm to 60 nm and a length of 100 nm to 5,000 nm.

4. The separator according to claim 3, wherein a ratio of a particle size D50 of the component B to the diameter of the component A is 5 to 125; and a ratio of a particle size D90 of the component B to the length of the component A is 0.5 to 15.

5. The separator according to claim 4, wherein the particle size D50 of the component B is 150 nm to 700 nm, and the particle size D90 of the component B is 300 nm to 1,500 nm.

6. The separator according to claim 3, wherein a ratio of a particle size D50 of the binder to the diameter of the component A is 25 to 950; and a ratio of a particle size D90 of the binder to the length of the component A is 2 to 95.

7. The separator according to claim 6, wherein the particle size D50 of the binder is 0.5 µm to 4 µm, and the particle size D90 of the binder is 1 µm to 10 µm.

8. The separator according to claim 1, wherein the component A is at least one selected from the group consisting of bacterial cellulose, a carboxylated cellulose nanofiber, a cellulose nanocrystal, a sulfonated cellulose nanocrystal, microfibrillated cellulose, and aminated cellulose; the oxide is at least one selected from the group consisting of silicon dioxide, aluminum oxide, silicon monoxide, calcium oxide, magnesium oxide, zinc oxide, titanium dioxide, and boehmite; and the binder is at least one selected from the group consisting of a polyvinylidene fluoride-based resin, polyamide, polyimide, polyacrylonitrile, polyethylene oxide, polyurethane, polyphenylene ether, acrylate copolymer, and polymethyl methacrylate (PMMA).

9. A preparation method of the separator according to any one of claims 1 to 8, comprising following steps:
mixing the component A, the component B, the binder, and a solvent to produce a coating slurry for the hybrid coating; and
applying the coating slurry for the hybrid coating to at least one surface of the substrate layer, and oven-drying to produce the separator.

10. A secondary battery, comprising a positive electrode, a negative electrode, and a separator arranged between the positive electrode and the negative electrode, wherein the separator is the separator according to any one of claims 1 to 8.
